# EUROPÄISCHE PATENTANMELDUNG

(11) **EP 1 091 286 A2**
(43) Veröffentlichungstag der Anmeldung: **11.04.2001**
(21) Anmeldenummer: 00117766.6
(22) Anmeldetag: 18.08.2000
(51) Int. Cl.: G06F 3/14

(54) **Vorrichtung zur Anzeige von Informationen**

(30) Priorität: 06.10.1999 DE 19948024
(71) Anmelder: ROBERT BOSCH GMBH, 70442 Stuttgart (DE)
(72) Erfinder: Kalkbrenner, Hans-Joachim, 38667 Bad Harzburg (DE)

(57) **Zusammenfassung**

Es wird eine Vorrichtung zur Anzeige von Informationen vorgeschlagen, die zur Anzeige von ausgewählten Informationen in mehreren Sprachen dient. Dabei wird die Anzeige der Informationen in mehreren Sprachen gleichzeitig vorgenommen. Die Vorrichtung umfaßt mindestens einen Prozessor (1), mindestens eine Signalverarbeitung (2), mindestens einen Speicher (4) und mindestens eine Anzeigevorrichtung (3). Der Prozessor (1) wählt die Informationen für die Anzeige aus und bestimmt, wo die Informationen und in welcher Sprache dargestellt werden. Die Signalverarbeitung (2) bereitet die ausgewählten Informationen für die Darstellung auf der Anzeigevorrichtung (3) vor. Die Anzeigevorrichtung (3) zeigt die dargestellten Informationen an. Die ausgewählten Informationen werden in einer Weiterbildung der Erfindung mittels einer Sende-/Empfangsstation (27) empfangen. Dabei wird entweder eine drahtlose oder eine drahtgebundene Kommunikation verwendet.

## Beschreibung

### Stand der Technik

Die Erfindung geht aus von einer Vorrichtung zur Anzeige von Informationen nach der Gattung des unabhängigen Patentanspruchs.

Es ist bereits bekannt, daß bei öffentlichen Verkehrsmitteln Monitore eingesetzt werden, um Informationen für Fahrgäste bereitzuhalten. Diese Informationen betreffen die Fahrstrecke, die Fahrzeiten und den Fahrtverlauf. Diese Fahrgastinformationen werden in der Landessprache auf den Monitoren angezeigt. Bei Monitoren oder auch öffentlichen Fernsprechern ist eine Sprachumschaltung durch Betätigen einer Taste vorgesehen, um Meldungen und Informationen in einer anderen Sprache auszugeben.

### Vorteile der Erfindung

Die erfindungsgemäße Vorrichtung mit den Merkmalen des unabhängigen Patentanspruchs hat demgegenüber den Vorteil, daß Informationen gleichzeitig in mehreren Sprachen angezeigt werden. Eine Anzeigevorrichtung wird dabei vorteilhafter Weise für die Darstellung von der gleichen Information in mehreren Sprachen verwendet.

Durch die in den abhängigen Ansprüchen aufgeführten Maßnahmen sind vorteilhafte Weiterbildungen und Verbesserungen der im unabhängigen Anspruch angegebenen Vorrichtung möglich.

Besonders vorteilhaft ist, daß ein Prozessor der Vorrichtung mit mehreren Signalverarbeitungseinrichtungen verbunden ist, um damit eine ausgewählte Information in mehreren Sprachen auf mehreren Anzeigevorrichtungen zur Anzeige zu bringen. Dadurch ist es möglich, daß eine Information in einer Sprache auf einem Monitor dargestellt wird, während die gleiche Information auf einem anderen Monitor in einer anderen Sprache dargestellt wird.

Darüber hinaus ist von Vorteil, daß eine erfindungsgemäße Vorrichtung mehr als einen Prozessor aufweist, wobei jeder Prozessor mit einer Signalverarbeitung, die wiederum mit einer Anzeigevorrichtung verbunden ist, so daß jeweils ein Prozessor die ausgewählten Informationen in einer jeweiligen Sprache auf einer Anzeigevorrichtung zur Anzeige bringt. Der Einsatz von mehreren Prozessoren beschleunigt die Darstellung der Informationen.

Weiterhin ist von Vorteil, daß die Vorrichtung in einer Weiterbildung der Erfindung einen Prozessor, eine Signalverarbeitung und eine Anzeigevorrichtung aufweist, wobei dann der Prozessor die eine Anzeigevorrichtung in Anzeigefelder aufteilt, um in diesen Anzeigefeldern die Information in einer jeweiligen Sprache darzustellen. Diese Weiterbildung führt zu einem besonders kostengünstigen und einfachen Produkt.

Darüber hinaus ist von Vorteil, daß ein Prozessor eine angezeigte Information in einem bestimmten Zeitintervall abwechselnd in verschiedenen Sprachen darstellt. Durch diese Weiterbildung der Erfindung ist es möglich, auch größere Texte oder Bilder oder Videos in mehreren Sprachen unter Ausnutzung des gesamten Anzeigefeldes der Anzeigevorrichtung darzustellen.

In einer vorteilhaften Weiterbildung der Erfindung ist die erfindungsgemäße Vorrichtung mit einer Sende-/Empfangsstation verbunden, um mittels dieser Sende-/Empfangsstation Informationen abzurufen und/oder zu empfangen. Dadurch ist es möglich, die erfindungsgemäße Vorrichtung laufend mit aktuellen Informationen zu bedienen und damit laufend diese aktuellen Informationen auf der Anzeigevorrichtung darzustellen. Diese Weiterbildung ist insbesondere für den mobilen Einsatz der erfindungsgemäßen Vorrichtung interessant, wie z.B. im öffentlichen Nahverkehr.

In einer vorteilhaften Weiterbildung der Erfindung ist vorgesehen, daß die Sende-/Empfangsstation die Informationen über Funkkanäle abruft oder empfängt. Diese Weiterbildung ist insbesondere für den mobilen Einsatz der erfindungsgemäßen Vorrichtung von Vorteil, um die erfindungsgemäße Vorrichtung laufend mit aktuellen Informationen zu versorgen.

Darüber hinaus ist von Vorteil, daß die erfindungsgemäße Vorrichtung mittels der Sende-/Empfangsstation Informationen über ein drahtgebundenes Kommunikationsnetz abruft und/oder empfängt, wodurch eine sehr einfache Erneuerung der darzustellenden Informationen über ein bereits vorhandenes Kommunikationsnetz ermöglicht wird.

### Zeichnung

Ausführungsbeispiele der Erfindung sind in der Zeichnung dargestellt und in der nachfolgenden Beschreibung näher erläutert. Es zeigen Figur 1 eine erfindungsgemäße Vorrichtung mit einem Prozessor und einer Anzeigevorrichtung, Figur 2 eine erfindungsgemäße Vorrichtung mit einem Prozessor und mehreren Anzeigevorrichtungen, Figur 3 eine erfindungsgemäße Vorrichtung mit mehreren Prozessoren und mehreren Anzeigevorrichtungen aber einem Speicher, Figur 4 eine erfindungsgemäße Vorrichtung, die mit einer Sende-/Empfangsstation verbunden ist und Figur 5 eine erfindungsgemäße Vorrichtung, die mit einem Modem verbunden ist.

### Beschreibung der Ausführungsbeispiele

Aufgrund von steigender Mobilität und einer Internationalisierung insbesondere in Ballungszentren sind Informationen allein in einer Landessprache oft nicht mehr ausreichend. Insbesondere für Nahverkehrsmittel ist eine Darstellung der Information in einer Landessprache und in zumindest Englisch notwendig, um den Anforderungen an die neuen Gegebenheiten gerecht zu werden.

Um Informationen zu öffentlichen Nahverkehrsmitteln zu verteilen, bieten digitale Rundfunksysteme ausgezeichnete Möglichkeiten, solche Daten zu übertragen. DAB (Digital Audio Broadcasting) ist ein solches digitales Rundfunkverfahren, das aufgrund seiner Rahmenstruktur zur Übertragung von beliebigen Multimediadaten geeignet ist.

DAB wird im sogenannten orthogonalen Frequenzmultiplex (engl. Orthogonal Frequency Division Multiplex = OFDM) übertragen, bei dem zu versendende Signale auf viele Unterträger verteilt werden, wobei diese Unterträger zueinander einen bestimmten Frequenzabstand haben, so daß sich die auf die Unterträger verteilten Signale gegenseitig nicht stören. Dieses Verhalten wird mit orthogonal beschrieben.

DAB profitiert von der Eigenschaft von dem orthogonalen Frequenzmultiplex, daß wenn nur eine frequenzselektive Dämpfung auftritt nur ein geringer Teil des übertragenen Rundfunksignals gestört wird, da das Rundfunksignal auf eine Vielzahl von Frequenzen verteilt wurde und nur ein Signalanteil gestört wird, der auf einer Frequenz übertragen wird, bei der eine starke Dämpfung auftritt.

Der gestörte Signalanteil wird durch fehlerdetektierende und korrigierende Maßnahmen korrigiert. Zu diesen fehlerdetektierenden und -korrigierenden Maßnahmen gehören fehlerdetektierende und -korrigierende Codes, wie z.B. Blockcodes oder Faltungscodes.

Neben DAB zeigen auch die bekannten digitalen Rundfunkübertragungsverfahren DVB (Digital Video Broadcasting) und DRM (Digital Radio Mondial) OFDM auf und unterscheiden sich von DAB allein im Sendefrequenzbereich, in der Rahmenstruktur und in der Übertragungsrate. Diese Verfahren erlauben jedoch auch die Übertragung von Multimediadaten.

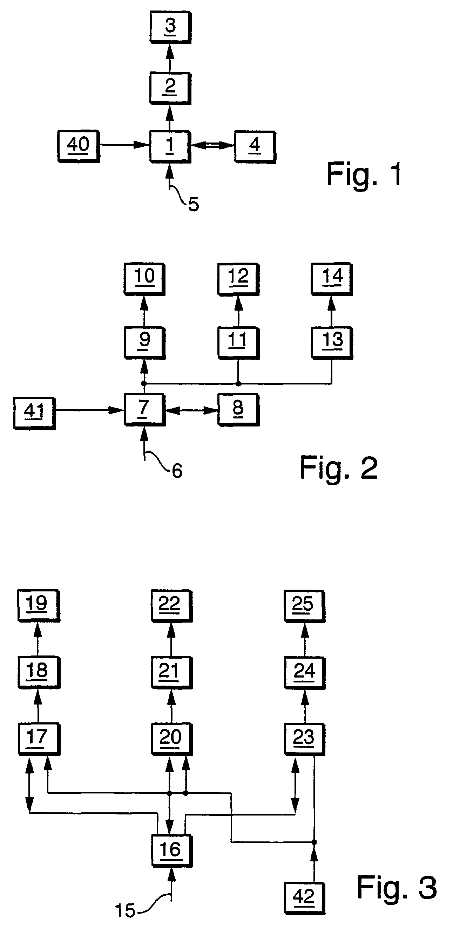

In Figur 1 ist eine erfindungsgemäße Vorrichtung dargestellt. Ein Datenstrom 5, der darzustellende Informationen aufweist, führt in einen Prozessor 1, der mit einem Speicher 4 über einen Ausgang verbunden ist. Der Datenstrom 5 wird von dem Prozessor 1 in dem Speicher 4 abgespeichert. Der Datenstrom 5 erhält entweder die Informationen bereits in den verschiedenen Sprachen oder in nur einer Sprache. Liegt die Information nur in einer Sprache vor, dann weist der Prozessor 1 Programme auf, um die Information in andere Sprachen zu übersetzen.

Der Speicher 4 erlaubt das Überschreiben von Daten. Der Prozessor 1 bestimmt anhand einiger Kriterien, ob Informationen aus dem Speicher 4 geladen werden sollen und mittels einer an den Prozessor 1 angeschlossenen Signalverarbeitung für eine Anzeige mittels einer an die Signalverarbeitung 2 angeschlossenen Anzeigevorrichtung 3 zur Anzeige gebracht zu werden.

Diese Kriterien sind die Uhrzeit und das Datum, wobei der Prozessor eine interne Uhr und einen elektronischen Kalender aufweist, und auch der Ort, an dem sich die erfindungsgemäße Vorrichtung befindet, wozu der Prozessor 1 mit einer Ortungsvorrichtung 40 verbunden ist, die die Ortskoordinaten der erfindungsgemäßen Vorrichtung angibt. Dazu ist diese Ortungsvorrichtung 40 sehr nahe an der erfindungsgemäßen Vorrichtung angebracht. Die Ortungsvorrichtung 40 ist ein GPS (Global Positioning System) Empfänger, der mittels empfangener Satellitendaten die Ortskoordinaten berechnet.

Ein weiteres Kriterium sind noch anstehende Fahrtziele bei einem Fahrzeug im öffentlichen Nahverkehr. Dazu vergleicht der Prozessor 1 den Standort der erfindungsgemäßen Vorrichtung, der mit der Ortungsvorrichtung ermittelt wird, mit einem im Speicher 4 abgespeicherten Fahrplan, um die noch verbleibenden Fahrtziele zu bestimmen.

Darüber hinaus ist ein Kriterium die Außentemperatur, die mittels eines elektronischen Thermometers gemessen wird und als Datum dem Prozessor 1 mitgeteilt wird. Steigt die Außentemperatur über einen bestimmten Wert, können dann Werbeeinblendungen in verschiedenen Sprachen für Erfrischungen und/oder Gaststätten, die Erfrischungen reichen, angezeigt werden.

Der Prozessor 1 kann auch mit einem Windmesser verbunden sein, der die Windgeschwindigkeit als Datum an den Prozessor 1 überträgt, so daß Sturmwarnungen in verschiedenen Sprachen angezeigt werden können.

Der Prozessor 1 teilt das Anzeigefeld der Anzeigevorrichtung 3 in Anzeigefelder auf, um die ausgewählte Information in diesen Anzeigefeldern in verschiedenen Sprachen darzustellen. Die Signalverarbeitung 2 ist eine Grafikkarte, die die Daten, die vom Prozessor 1 zur Grafikkarte 2 übertragen werden, für die Anzeige auf der Anzeigevorrichtung 3 vorbereitet. Die Grafikkarte 2 weist einen eigenen Speicher auf, in dem die darzustellenden Informationen zwischengespeichert werden.

In Figur 2 ist eine erfindungsgemäße Vorrichtung dargestellt, die einen Prozessor 7, einen Speicher 8, eine Ortungsvorrichtung 41, aber drei Signalverarbeitungen 9, 11 und 13 und drei Anzeigen, die an die jeweilige Signalverarbeitung angeschlossen sind 10, 12 und 14 auf.

Ein Datenstrom 6, der die darzustellende Information beinhaltet, wird von dem Prozessor 7 empfangen und von dem Prozessor 7 über einen Ein-/Ausgang zu dem Speicher 8 übertragen. Für die Informationen gilt das oben Gesagte, daß die Informationen entweder bereits in allen darzustellenden Sprachen vorliegen oder nur in einer Sprachen.

Die darzustellenden Informationen werden von dem Prozessor 7 aus dem Speicher 8 nach den obengenannten Kriterien ausgewählt, wobei der Prozessor 7 mit der Ortungsvorrichtung 41 verbunden ist, um den Standort der erfindungsgemäßen Vorrichtung zu bestimmen, und an die Signalverarbeitungen 9, 11, 13 übertragen, um auf die an die Signalverarbeitungen 9, 11, 13 angeschlossenen Anzeigevorrichtungen 10, 12 und 14 dargestellt zu werden. Der Prozessor 7 legt dabei fest, daß die ausgewählten Informationen in verschiedenen Sprachen auf den jeweiligen Anzeigevorrichtungen dargestellt werden. Ist zum Beispiel auf der Anzeigevorrichtung 10 die darzustellende Information in Deutsch dargestellt, während auf der Anzeigevorrichtung 12 die gleiche Information in Englisch dargestellt wird und auf der Anzeigevorrichtung 14 wiederum in Deutsch. Hier sind beispielhaft drei Signalverarbeitungen mit drei Anzeigevorrichtungen dargestellt, es ist jedoch auch möglich, diese Zahl zu erhöhen oder zu erniedrigen.

In Figur 3 ist eine erfindungsgemäße Vorrichtung dargestellt, die drei Prozessoren 17, 20 und 23, daran angeschlossen drei Signalverarbeitungen 18, 21 und 24 und daran jeweils angeschlossen drei Anzeigevorrichtungen 19, 22 und 25 aufweist.

Ein Datenstrom 15 wird von einem Speicher 16 empfangen und dort gehalten. Wiederum gilt das oben Gesagte über den Inhalt der Informationen bezüglich der Sprachen.

Die Prozessoren 17, 20 und 23, die jeweils über einen ersten, zweiten und dritten Ein-/Ausgang des Speichers 16 verbunden sind, fragen darzustellende Informationen nach den oben genannnten Kriterien von dem Speicher 16 ab. Dazu sind die Prozessoren 17, 20 und 23 mit einer Ortungsvorrichtung 42 verbunden.

Der Prozessor 17 bereitet die darzustellenden Informationen für die Signalverarbeitung 18 vor, so daß die Signalverarbeitung 18 die darzustellenden Informationen dann mittels der Anzeigevorrichtung 19 anzeigt.

Der Prozessor 20 führt ebenso eine Vorbereitung der darzustellenden Informationen vor und übergibt sie dann an die Signalverarbeitung 21, die dann die Daten an die angeschlossene Anzeigevorrichtung 22 übergibt und dort zur Anzeige bringt.

Der Prozessor 23 erhält ebenfalls die darzustellenden Informationen von dem Speicher 16, bereitet sie auf, so daß sie dann mittels der an den Prozessor 23 angeschlossenen Signalverarbeitung 24 für die Anzeigevorrichtung 25 vorbereitet werden, um dann mittels der Anzeigevorrichtung 25 angezeigt zu werden.

Damit die Information gleichzeitig von den drei Anzeigevorrichtungen 19, 22 und 25 dargestellt wird, sind die Prozessoren 17, 20 und 23 miteinander synchronisiert. Dies führt auch dazu, daß immer die gleiche Information auf den drei Anzeigevorrichtungen 19, 20 und 25 dargestellt wird. Im übrigen kann aber auch auf die Synchronisation der Prozessoren 17, 20 und 23 verzichtet werden, da die Verarbeitungsgeschwindigkeit so schnell sein wird, daß Betrachter der Anzeigevorrichtungen 19, 22 und 25 keine unterschiedlichen Informationen dargestellt werden bekommen.

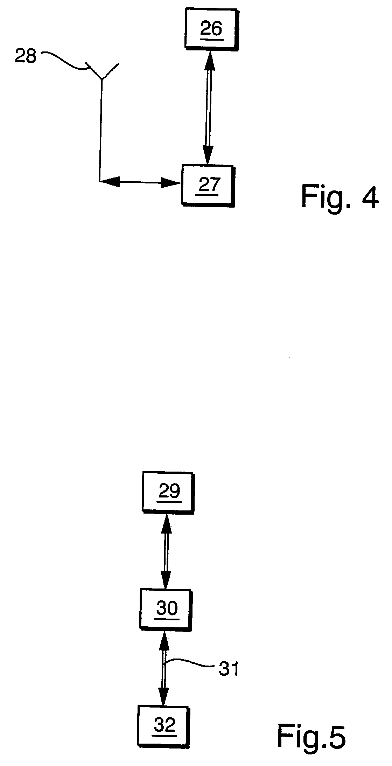

In Figur 4 ist in einem Blockschaltbild dargestellt, wie eine erfindungsgemäße Vorrichtung 26 mit einer Sende-/Empfangsstation 27 über einen Ein-/Ausgang verbunden ist, wobei die Sende-/Empfangsstation 27 mit einer Antenne über einen Ein-/Ausgang verbunden ist.

Die Sende-/Empfangsstation 27 dient zum Empfang von darzustellenden Informationen, die dann als Datenstrom zur Vorrichtung 26 übertragen werden, um dann dort in einem Speicher abgespeichert zu werden. Die Daten werden mittels der Antenne 28 empfangen und in der Sende-/Empfangsstation verstärkt gefiltert in ein Basisband heruntergemischt und digitalisiert, so daß ein digitaler Datenstrom entsteht.

Als Übertragungsverfahren bieten sich z.B. digitale Rundfunkübertragungsverfahren wie DAB oder DVB an, wobei hier dann nur ein Empfang möglich ist, da Rundfunkübertragungsverfahren Simplexverfahren sind, d.h. ein Empfänger kann nicht senden.

Bei der Verwendung eines Mobilfunkverfahrens, wie z.B. GSM (Global System for Mobile Communications) ist auch ein Rückkanal möglich, so daß die Sende-/Empfangsstation hier tatsächlich senden kann, um darzustellende Informationen abzufragen, wobei die Vorrichtung 26 der Sende-/Empfangsstation 27 diese Abfrage übergibt, die dann mittels der Antenne 28 versendet wird. GSM ist ein weltweit verwendeter Standard für digitalen zellularen Mobilfunk. Neben GSM sind auch andere Mobilfunkstandards wie z.B. UMTS (Universal Mobile Telecommunications System) anwendbar.

In Figur 5 ist mittels eines Blockschaltbildes gezeigt, wie eine erfindungsgemäße Vorrichtung 29 mit einem Modem 30 als Sende-/Empfangsstation über ein Kommunikationsnetz 31 mit einer Gegenstation 32 verbunden ist. Die Vorrichtung 29 übergibt an das Modem 30 eine Anfrage, daß Informationen von einer Gegenstation 32 angefordert werden sollen. Das Modem 30 wandelt diese Anfrage in Daten um, die über das Kommunikationsnetz 31, z.B. das Telefonnetz oder das Internet, zu einer Gegenstelle 32 gesendet werden. Die Gegenstelle 32 ist ein Rechner mit einer angeschlossenen Datenbank, die die darzustellenden Informationen enthält. Über das Kommunikationsnetz 31 erhält dann das Modem 30 die darzustellenden Informationen, die sie dann an die Vorrichtung 29 überträgt.

## Patentansprüche

1. Vorrichtung zur Anzeige von Informationen, wobei die Vorrichtung mindestens einen Prozessor (1) aufweist, wobei der mindestens eine Prozessor (1) die Informationen aus mindestens einem Speicher (4) lädt, wobei der Prozessor (1) die Informationen für die Anzeige auswählt, wobei der Prozessor (1) die ausgewählten Informationen zu mindestens einer Signalverarbeitung (2) überträgt, wobei die mindestens eine Signalverarbeitung (2) die ausgewählten Informationen zu mindestens einer Anzeigevorrichtung (3) überträgt, dadurch gekennzeichnet, daß der Prozessor (1) die ausgewählten Informationen für die Anzeige in verschiedenen Sprachen vorbereitet, indem der Prozessor (1) für die ausgewählten Informationen in einer jeweiligen Sprache ein Anzeigefeld auf der mindestens einen Anzeigevorrichtung (3) zuordnet.

2. Vorrichtung nach Anspruch 1, dadurch gekennzeichnet, daß die Vorrichtung einen Prozessor (7), einen Speicher (8) mehr als eine Signalverarbeitung (9, 11, 13) und mehr als eine Anzeigevorrichtung (10, 12, 14) aufweist und daß der eine Prozessor (7) den ausgewählten Informationen für jede Sprache, in der die ausgewählten Informationen erscheinen, eine Anzeigevorrichtung (10, 12, 14) zur Anzeige zuordnet.

3. Vorrichtung nach Anspruch 1, dadurch gekennzeichnet, daß die Vorrichtung mehr als einen Prozessor (17, 20, 23) mindestens einen Speicher (16) mehr als eine Signalverarbeitung (18, 21, 24) und mehr als eine Anzeigevorrichtung (19, 22, 25) aufweist, und daß ein jeweiliger Prozessor (17, 20, 23) die ausgewählten Informationen in einer jeweiligen Sprache einer Anzeigevorrichtung (19, 22, 25) zur Anzeige zuordnet.

4. Vorrichtung nach Anspruch 1, dadurch gekennzeichnet, daß die Vorrichtung einen Prozessor (1), einen Speicher (4) eine Signalverarbeitung (2) und mindestens eine Anzeigevorrichtung (3) aufweist, und daß der Prozessor (1) den ausgewählten Informationen für die jeweilige Sprache, in der die ausgewählten Informationen erscheinen, ein Anzeigefeld auf der mindestens einen Anzeigevorrichtung zuordnet.

5. Vorrichtung nach Anspruch 4, dadurch gekennzeichnet, daß der Prozessor (1) in einem Zeitintervall abwechselnd die ausgewählten Informationen in unterschiedlichen Sprachen auf dem Anzeigefeld zur Anzeige bringt.

6. Vorrichtung nach Anspruch 2, 3, 4 oder 5, dadurch gekennzeichnet, daß die Vorrichtung (26) mit einer Sende-/Empfangsstation (27) verbunden ist, um die Informationen mittels der Sende-/Empfangsstation (27) abzurufen und/oder zu empfangen.

7. Vorrichtung nach Anspruch 6, dadurch gekennzeichnet, daß die Vorrichtung (26) mittels der Sende-/Empfangsstation (27) die Informationen über Funkkanäle abruft und/oder empfängt.

8. Vorrichtung nach Anspruch 6, dadurch gekennzeichnet, daß die Vorrichtung (29) mittels der Sende-/Empfangsstation (30) die Informationen über ein drahtgebundenes Kommunikationsnetz abruft und/oder empfängt.
